# EUROPÄISCHE PATENTSCHRIFT

(11) **EP 3 338 009 B1**
(45) Veröffentlichungstag und Bekanntmachung des Hinweises auf die Patenterteilung: **18.03.2020**
(21) Anmeldenummer: 16766216.2
(22) Anmeldetag: 16.08.2016
(51) Int. Cl.: F16H 57/04

(54) **VERFAHREN ZUM STEUERN DES ÖLNIVEAUS IN EINEM GETRIEBE SOWIE GETRIEBE ZUR DURCHFÜHRUNG DES VERFAHRENS**
METHOD FOR CONTROLLING THE OIL LEVEL IN A GEARBOX, AND GEARBOX FOR CARRYING OUT SAID METHOD
PROCÉDÉ DE RÉGULATION DU NIVEAU D'HUILE DANS UNE TRANSMISSION ET TRANSMISSION POUR LA MISE EN OEUVRE DU PROCÉDÉ

(30) Priorität: 19.08.2015 AT 5482015
(43) Veröffentlichungstag der Anmeldung: 27.06.2018
(73) Patentinhaber: AVL Commercial Driveline & Tractor Engineering GmbH, 4400 Steyr (AT)
(72) Erfinder: TOCHTERMANN, Jürgen, 4400 Steyr (AT)
(74) Vertreter: Babeluk, Michael
(86) Internationale Anmeldenummer: PCT/AT2016/050253
(87) Internationale Veröffentlichungsnummer: WO 2017/027894

(56) Entgegenhaltungen:
- EP-A1- 0 406 649
- EP-A1- 2 711 591
- WO-A1-2005/059409
- WO-A1-2008/108720
- WO-A1-2011/048183
- DE-A1-102009 045 426

## Beschreibung

Die Erfindung betrifft ein Verfahren zum Steuern des Ölniveaus in einem Differentialgetriebe, für ein Fahrzeug, welches einen Ölsumpf und einen vom Ölsumpf abgetrennten Ölbehälter aufweist, wobei der Ölbehälter über zumindest einen Ölkanal mit dem Ölsumpf verbunden ist, und der Ölsumpf über zumindest ein Steuerventil und eine Luftleitung mit einer pneumatischen Druckquelle verbunden wird, wobei in zumindest einer Stellung des Steuerventils die Druckquelle mit dem Ölsumpf pneumatisch verbunden wird, wobei zumindest ein erster charakteristischer Betriebsparameter des Fahrzeugs ermittelt wird. Weiters betrifft die Erfindung ein Differentialgetriebe zur Durchführung des Verfahrens.

Die DE 10 2009 045 426 A1 beschreibt eine Anordnung zum Ausgleichen von Druck- und/oder Kühlmittelniveaus in verschiedenen Gehäuseteilen eines Getriebes eines Fahrzeuges mit einer Druckluftversorgung. Über die Druckluftversorgung kann in einen Gehäuseteil mit einem höheren Ölniveau Druckluft zum Verdrängen von Öl über zumindest einen Ölkanal in einen Gehäuseteil mit niedrigeren Ölniveau geführt werde. Die Druckluftversorgung ist außerhalb des Gehäuses angeordnet und über zumindest eine Pneumatikleitung mit einem der Gehäuseteile verbunden.

Weiters ist aus der EP 0 406 649 A1 eine Einrichtung zur Einstellung des Ölstandes in einem Getriebe bekannt, welche wenigstens zwei getrennte Getriebegehäusekammern enthält, die teilweise mit Luft und teilweise mit Öl gefüllt sind. Und zwischen denen Ölaustausch möglich ist. Mit einer Luftpumpe wird in eine Gehäusekammer, in welcher Neigung zur Ölansammlung besteht, Luft gedrückt, so dass Öl aus der ersten Getriebegehäusekammer verdrängt und in eine zweite Getriebegehäusekammer gedrückt wird.

Die WO 2008/108720 A1 offenbart eine Schmiereinrichtung für ein Schaltgetriebe eines Fahrzeuges, wobei das Schaltgetriebe pro im Eingriff stehendem Zahnradpaar jeweils einen eigenen Ölraum aufweist. Das Ölniveau jedes Ölraumes kann unabhängig von den anderen Ölräumen abgesenkt oder erhöht werden. Dabei wird jeweils das Ölniveau von Ölräumen, deren Zahnradpaare gerade Drehmoment übertragen, erhöht, während in Ölraumen, deren Zahnräder inaktiv sind, die Ölniveaus abgesenkt werden. Die Steuerung der Ölniveaus erfolgt dabei in Abhängigkeit der Last bzw. des übertragenen Drehmomentes.

Insbesondere bei hohen Fahrzeuggeschwindigkeiten treten große Planschverluste auf, wenn der Ölstand zu hoch ist. Dabei würde bei hohen Drehzahlen und den resultierenden niedrigen Drehmomenten an den Getriebeteilen durch den entstehenden Ölnebel auch ein niedriger Ölstand für eine ausreichende Schmierung genügen. Andererseits ist bei niedrigen Fahrzeuggeschwindigkeiten bzw. niedrigen Drehzahlen und den daraus resultierenden höheren Drehmomenten an den Getriebeteilen ein höherer Ölstand notwendig.

Die gattungsgemäße WO 2005/059409 A1 zeigt eine Getriebeanordnung für ein Fahrzeug, wobei ein ein Schaltgetriebe aufweisender Hauptgetriebeteil und ein ein Differentialgetriebe aufweisender erster Getriebeabschnitt pneumatisch voneinander getrennt und über einen Ölkanal miteinander hydraulisch verbunden sind. Mittels eines Steuerventils kann eine pneumatische Verbindung zwischen dem Hauptgetriebeteil und dem ersten Getriebeabschnitt hergestellt werden. Aneinandergrenzende Getriebegehäuseteile des ersten und eines zweiten Getriebeabschnittes bilden einen Teil des Schmiermittelsumpfes. Zwischen den zwei Getriebeabschnitten ist ein Trennmittel vorgesehen, mit welchem das Schmiermittel in jenem Getriebegehäuseteil zurückgehalten werden kann, dessen Getriebeabschnitt in dem momentanen Betriebszustand nicht oder mit geringer Drehzahl betrieben wird. Über eine Luftpumpe kann Luft aus den zwei Getriebeabschnitten in den Hauptgetriebeteil gefördert werden. Dadurch können Planschverluste verringert werden.

Aus der EP 2 711 591 A1 ist es bekannt, in Abhängigkeit der Fahrzeuggeschwindigkeit die optimale Öltemperatur und das optimale Ölniveau zu ermitteln und mittels einer Ölpumpe zu einzustellen.

Aufgabe der Erfindung ist es, den Gesamtwirkungsgrad des Antriebsstranges zu erhöhen und gleichzeitig eine ausreichende Schmierung zu gewährleisten.

Erfindungsgemäß wird diese Aufgabe dadurch gelöst, dass das Steuerventil in Abhängigkeit zumindest dieses ersten charakteristischen Betriebsparameters des Fahrzeugs betätigt wird, wobei als erster charakteristischer Betriebsparameter die Fahrzeuggeschwindigkeit ausgewählt wird, und dass ein zweiter charakteristischer Betriebsparameter - beispielsweise das Ölniveau im Ölsumpf - ermittelt wird und das Steuerventil in Abhängigkeit dieses zweiten charakteristischen Betriebsparameters betätigt wird.

Vorzugsweise wird das Steuerventil bei Erreichen und/oder oberhalb eines definierten ersten Mindestwertes des ersten charakteristischen Betriebsparameters in die erste Stellung geschalten. Unterhalb des definierten Schwellwertes des er sten charakteristischen Betriebsparameters wird das Steuerventil in eine zweite Stellung geschalten, in welcher der Ölsumpf pneumatisch von der Druckquelle getrennt und mit einer Drucksenke, vorzugsweise mit der Umgebung strömungsverbunden wird.

Besonders vorteilhaft ist es, wenn das Steuerventil bei Erreichen oder oberhalb eines Schwellwertes des zweiten charakteristischen Betriebsparameters in eine dritte Stellung geschalten wird, in welcher der Ölsumpf von der Druckquelle und von der Umgebung pneumatisch getrennt ist.

In einer besonders bevorzugten Ausführungsvariante der Erfindung ist vorgesehen, dass das Steuerventil in Abhängigkeit zumindest eines dritten charakteristischen Betriebsparameters, beispielsweise der Neigung des Fahrzeuges, in eine vierte Stellung geschaltet wird, in welcher der Ölbehälter mit der Druckquelle, vorzugsweise der Ölsumpf mit der Umgebung, pneumatisch verbunden ist.

Das Ölniveau des Ölsumpfes wird somit in Abhängigkeit des ersten charakteristischen Betriebsparameters - der Fahrzeuggeschwindigkeit - geregelt, also bei hohen Fahrzeuggeschwindigkeiten bzw. Drehzahlen verringert und bei niedrigen Fahrzeuggeschwindigkeiten bzw. Drehzahlen erhöht. Die Steuerung des Ölniveaus erfolgt beispielsweise über eine elektronische Steuereinheit, welcher als Eingangs größe zumindest ein charakteristischer Betriebsparameter zugeführt wird. Dabei kann der Eingang der Steuereinheit mit einem Sensor zur Erfassung der Fahrzeuggeschwindigkeit oder der Drehzahl einer charakteristischen Welle des Differentialgetriebes verbunden sein. Zusätzlich kann über einen weiteren Sensor das Ölniveau des Ölsumpfes erfasst und der Steuereinheit als Eingangsgröße übermittelt werden.

Alle Ausführungsvarianten der Erfindung weisen die Hauptfunktionalität auf, dass das Ölniveau im Ölsumpf des Differentialgetriebes oberhalb eines definierten Schwellwertes für die Fahrzeuggeschwindigkeit bzw. für die Drehzahl einer charakteristischen Welle des Differentialgetriebes abgesenkt und unterhalb dieses Schwellwertes erhöht wird.

Bei niedrigen Fahrzeuggeschwindigkeiten, bei denen nur geringe Planschverluste auftreten wird ein hohes Ölniveau eingestellt, um ausreichende Schmierung der Zahnräder und Lager zu gewährleisten. Bei höheren Fahrzeuggeschwindigkeiten wird dagegen ein niedriges Ölniveau eingestellt, um Planschverluste zu vermeiden. Bei hohen Fahrzeuggeschwindigkeiten treten niedrigere maximale Zugkräfte auf und daraus resultierend niedrigere Drehmomente. Das reduziert die Anforderungen an die Schmierung. Außerdem bildet sich bei hohen Drehzahlen der Getriebeteile ein Ölnebel innerhalb des Gehäuses aus. So wird trotzdem eine ausreichende Schmierung der Zahnräder und Lager sichergestellt.

Die Regelung des Ölniveaus kann weiters in Abhängigkeit von weiteren Betriebsparameters, wie Fahrzeugneigung, Öltemperatur, spezielle Fahrbedingungen, etc. erfolgen. Um dies zu ermöglichen kann die Steuereinheit eingangsseitig mit weiteren Sensoren wie Neigungssensoren, Temperatursensoren oder dergleichen verbunden sein.

In einer einfachen und kostengünstigen Ausführungsvariante der Erfindung ist vorgesehen, dass das Steuerventil als 3/2-Wegventil oder als 4/2-Wegventil ausgebildet ist. Dabei weist das Ventil drei oder vier Anschlüsse auf, wobei ein Anschluss mit der Druckquelle, ein Anschluss mit dem Ölsumpf, ein Anschluss mit der Umgebung und beim 4/2-Wegventil ein Anschluss mit dem Ölbehälter verbunden ist. Bei Verwendung eines 3/2 Wegeventils ist zusätzlich ein Entlüfter erforderlich, der den Ölbehälter permanent mit der Umgebung verbindet. In der einem Standard-Ölniveau im Ölsumpf zugeordneten ersten Stellung (Ruhestellung) sind beide Behälter mit der Umgebung verbunden und von der Druckquelle getrennt. In der zweiten Stellung sind die Druckquelle mit dem Ölsumpf und der Behälter mit der Umgebung verbunden.

Diese Ausführungsvariante ermöglicht die Grundfunktionen mit einem minimalen Aufwand an Komponenten. Ein Ölniveausensor ist nicht erforderlich. Allerdings lassen sich Zwischenstellungen im Ölniveau schwer realisieren. Weiters ist zum Halten des Ölniveaus eine permanente Zufuhr von Druckluft erforderlich. Dabei kann es auch zum Aufschäumen von Öl kommen. Ohne Ölniveausensor gibt es allerdings keine Feedback-Information, wenn das Standard-Ölniveau erreicht wird.

Eine bessere Regulierbarkeit des Ölniveaus und eine höhere Funktionalität lassen sich erzielen, wenn das Steuerventil als 4/3-Wegventil ausgebildet ist. Wie bei 4/2-Wegventilen weist das 4/3-Wegventil vier Anschlüsse auf, wobei ein Anschluss mit der Druckquelle, ein Anschluss mit dem Ölsumpf, ein Anschluss mit dem, Ölbehälter und ein Anschluss mit der Umgebung verbunden ist. In der einem Standard-Ölniveau im Ölsumpf zugeordneten ersten Stellung (Ruhestellung) sind beide Behälter mit der Umgebung verbunden und von der Druckquelle getrennt. Die bei niedrigen Fahrzeuggeschwindigkeiten eingenommene erste Stellung erlaubt ein relativ hohes Ölniveau im Ölsumpf auf Standardniveau. In der zweiten Stellung sind die Druckquelle mit dem Ölsumpf und der Behälter mit der Umgebung verbunden. Diese Stellung wird bei hohen Fahrzeuggeschwindigkeiten angesteuert, um das Ölniveau im Ölsumpf abzusenken. Weiters ist eine dritte Stellung des Steuerventils vorgesehen, in welcher der Ölsumpf von der Druckquelle und von der Umgebung pneumatisch getrennt, aber auf Druck gehalten wird. Der Ölbehälter kann dabei mit der Umgebung verbunden sein.

Dadurch ist es möglich, auch Zwischenstellungen im Ölniveau des Ölsumpfes einzustellen. Das Ölniveau kann dabei bei jedem Ölniveau konstant gehalten werden, ohne dass ständig aktiv nachgesteuert und Druckluft in das Gehäuse des Differentialgetriebes eingeblasen werden muss. Mit einem Ölniveausensor kann das Ölniveau im Ölsumpf überwacht werden.

Eine noch höhere Funktionalität lässt sich erzielen, wenn das Ventil als 4/4-Wegventil ausgebildet ist. Zusätzlich zur Funktionalität des 4/3-Wegventils kann das Ölniveau im Ölsumpf nicht nur - in Bezug auf ein Standardniveau im drucklosen Zustand aktiv abgesenkt, sondern auch erhöht werden, indem Druckluft in einer Stellung des Ventils in den Ölbehälter eingeblasen wird. Dazu ist zusätzlich zu den beim 4/3-Wegventil erläuterten ersten, zweiten und dritten Stellungen noch eine vierte Stellung vorgesehen, in welcher der Ölbehälter mit der Druckquelle und der Ölsumpf mit der Umgebung pneumatisch verbunden ist. Auf diese Weise kann der Druck im Ölbehälter erhöht und das darin enthaltene Öl in den Ölsumpf gedrückt werden, wodurch das Ölniveau im Ölsumpf sogar über das Standardölniveau gehoben werden kann, um auch bei extremen Fahrbedingungen eine ausreichende Schmierung zu gewährleisten. Der Ölbehälter kann auch bei einer Anordnung innerhalb des Gehäuses des Differentialgetriebes komplett entleert werden. Sobald das erforderliche Ölniveau erreicht wird, wird das Steuerventil in die dritte Stellung bewegt, um das Ölniveau zu halten. Die Schaltung in die vierte Stellung kann aufgrund eines weiteren Betriebsparameters, wie beispielsweise die Neigung des Fahrzeuges, erfolgen.

Die Erfindung wird im Folgenden anhand der nicht einschränkenden Figuren näher erläutert. Es zeigen schematisch:
- Fig. 1: ein erfindungsgemäßes Differentialgetriebe in einer ersten Ausführungsvariante in einer ersten Stellung des Steuerventils;
- Fig. 2: ein erfindungsgemäßes Differentialgetriebe in einer ersten Ausführungsvariante in einer zweiten Stellung des Steuerventils;
- Fig. 3: ein erfindungsgemäßes Differentialgetriebe in einer zweiten Ausführungsvariante in einer ersten Stellung des Steuerventils;
- Fig. 4: ein erfindungsgemäßes Differentialgetriebe in einer zweiten Ausführungsvariante in einer zweiten Stellung des Steuerventils;
- Fig. 5: ein erfindungsgemäßes Differentialgetriebe in einer zweiten Ausführungsvariante in einer dritten Stellung des Steuerventils;
- Fig. 6: ein erfindungsgemäßes Differentialgetriebe in einer dritten Ausführungsvariante in einer ersten Stellung des Steuerventils;
- Fig. 7: ein erfindungsgemäßes Differentialgetriebe in einer dritten Ausführungsvariante in einer zweiten Stellung des Steuerventils;
- Fig. 8: ein erfindungsgemäßes Differentialgetriebe in einer dritten Ausführungsvariante in einer dritten Stellung des Steuerventils; und
- Fig. 9: ein erfindungsgemäßes Differentialgetriebe in einer dritten Ausführungsvariante in einer vierten Stellung des Steuerventils.

Die Figuren zeigen jeweils ein Differentialgetriebe 1 eines Fahrzeuges, wobei innerhalb des Gehäuses 2 des Differentialgetriebes 1 zwei pneumatisch getrennte, aber hydraulisch miteinander über zumindest einen Ölkanal 34 verbundene Räume, nämlich ein Ölsumpf 3 und ein Ölbehälter 4, angeordnet sind. In den Ölsumpf 3 mündet eine erste Luftleitung 5 und in den Ölbehälter 4 eine zweite Luftleitung 6 ein, wobei der Durchfluss durch die Luftleitungen 5, 6 mittels eines Steuerventils 7 gesteuert werden kann. Die Steuerung des Steuerventils 7 erfolgt über eine elektronische Steuereinheit ECU, welche als Eingangsgröße zumindest einen charakteristischen Betriebsparameter, beispielsweise die Fahrzeuggeschwindigkeit v, erhält. Das Steuerventil 7 ist jeweils als Mehrwegventil ausgeführt, wobei ein erster Anschluss a mit der ersten Luftleitung 5, ein zweiter Anschluss b mit der zweiten Luftleitung 6, ein dritter Anschluss c mit einer zu einer Druckquelle 8 führenden Druckleitung 9 und ein vierter Anschluss d mit einer in die Umgebung führenden Entlastungsleitung 10 verbunden ist. Die Druckquelle kann beispielsweise durch eine Luftpumpe gebildet sein. Das Ölniveau im Ölsumpf 3 ist durch das Bezugszeichen h3, das Ölniveau im Ölbehälter 4 durch das Bezugszeichen h4 angedeutet,

Alle Ausführungsvarianten der Erfindung weisen die Hauptfunktionalität auf, dass das Ölniveau h3 im Ölsumpf 3 des Differentialgetriebes 1 oberhalb eines definierten Schwellwertes für die Fahrzeuggeschwindigkeit v bzw. für die Drehzahl einer charakteristischen Welle des Differentialgetriebes 1 abgesenkt und unterhalb dieses Schwellwertes erhöht wird. Bei niedrigen Fahrzeuggeschwindigkeiten v, bei denen nur geringe Planschverluste auftreten, wird ein hohes Ölniveau h3 im Ölsumpf 3 eingestellt, um ausreichende Schmierung der Zahnräder und Lager des Differentialgetriebes 1 zu gewährleisten. Bei höheren Fahrzeuggeschwindigkeiten v wird dagegen ein niedriges Ölniveau h3 Ölsumpf eingestellt, um Planschverluste zu vermeiden. Bei hohen Fahrzeuggeschwindigkeiten treten niedrigere maximale Zugkräfte auf und daraus resultierend niedrigere maximale Drehmomente. Das reduziert die Anforderungen an die Schmierung. Außerdem bildet sich bei hohen Drehzahlen der Getriebeteile ein Ölnebel innerhalb des Gehäuses aus. So wird trotzdem eine ausreichende Schmierung der Zahnräder und Lager sichergestellt.

Die Regelung des Ölniveaus h3 im Ölsumpf 3 kann zusätzlich zur Fahrzeuggeschwindigkeit v in Abhängigkeit von weiteren Betriebsparameters, wie Fahrzeugneigung, Öltemperatur, spezielle Fahrbedingungen, etc. erfolgen. Derartige Einflüsse lassen sich vor allem mit den zweiten und dritten Ausführungsvarianten berücksichtigen, wobei die Steuereinheit ECU eingangsseitig mit weiteren Sensoren wie Neigungssensoren, Temperatursensoren oder dergleichen verbunden sein.

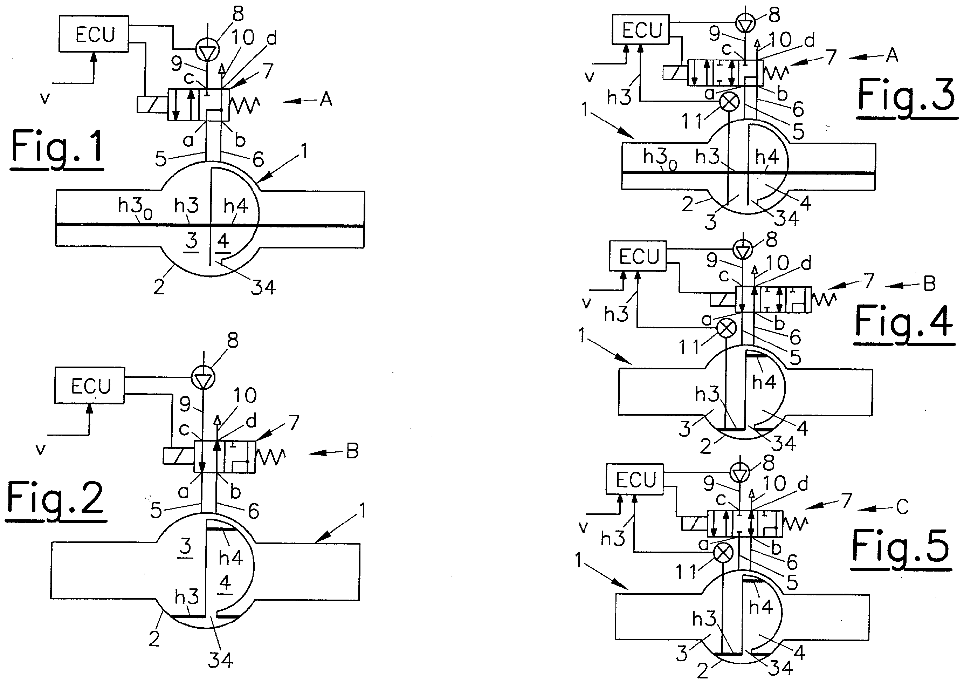

Die Fig. 1 und Fig. 2 zeigen eine einfache erste Ausführungsvariante der Erfindung, bei der das Schaltventil 7 als 4/2-Wegventil ausgebildet ist.

In der in Fig. 1 dargestellten ersten Stellung A (Ruhestellung) des Steuerventils 7 sind beide Räume - also sowohl der Ölsumpf 3, als auch der Ölbehälter 4 - mit der Umgebung verbunden und von der Druckquelle 8 getrennt. Die erste Stellung A ist einem Standard-Ölniveau h3₀ im Ölsumpf 3 zugeordnet. In der in Fig. 2 gezeigten zweiten Stellung B sind die Druckquelle 8 mit dem Ölsumpf 3 und der Ölbehälter 4 mit der Umgebung verbunden.

Die in Fig. 1 und Fig. 2 dargestellte Ausführungsvariante ermöglicht die Grundfunktionen mit einem minimalen Aufwand an Komponenten. Ein Ölniveausensor ist nicht unbedingt erforderlich.

Eine höhere Funktionalität kann mit den im Folgenden beschriebenen zweiten und dritten Ausführungsvarianten erreicht werden:
Die Fig. 3 bis Fig. 5 zeigen eine zweite Ausführungsvariante der Erfindung, bei der das Steuerventil 7 als 4/3-Wegventil ausgebildet ist. Wie bei der ersten Ausführung lassen sich eine erste Stellung A und eine zweite Stellung B ansteuern, wobei in der in Fig. 3 dargestellten ersten Stellung A (Ruhestellung) des Steuerventils 7 die beiden Räume - also sowohl der Ölsumpf 3, als auch der Ölbehälter 4 - mit der Umgebung verbunden und von der Druckquelle 8 getrennt sind. In der in Fig. 4 gezeigten zweiten Stellung B sind die Druckquelle 8 mit dem Ölsumpf 3 und der Ölbehälter 4 mit der Umgebung verbunden. Zusätzlich zur ersten Stellung A und zur zweiten Stellung B lässt sich eine dritte Stellung C ansteuern, wie in Fig. 5 gezeigt ist. In dieser dritten Stellung C des Steuerventils 7 ist der Ölsumpf 3 von der Druckquelle 8 und von der Umgebung pneumatisch getrennt, wird aber auf Druck gehalten. Der Ölbehälter 4 muss mit der Umgebung verbunden sein. Dadurch ist es möglich, auch Zwischenstellungen im Ölniveau h3 des Ölsumpfes 3 einzustellen. Jedes einstellbare Ölniveau h3 des Ölsumpfes 3 kann dabei konstant gehalten werden, ohne dass ständig aktiv nachgesteuert und Druckluft in das Gehäuse 2 des Differentialgetriebes 1 eingeblasen werden muss. Mit einem Ölniveausensor 11 kann das Ölniveau h3 im Ölsumpf 3 überwacht werden. Und jede Zwischenstellung des Ölniveaus h3 in Abhängigkeit des Ölniveaus h3 eingestellt werden.

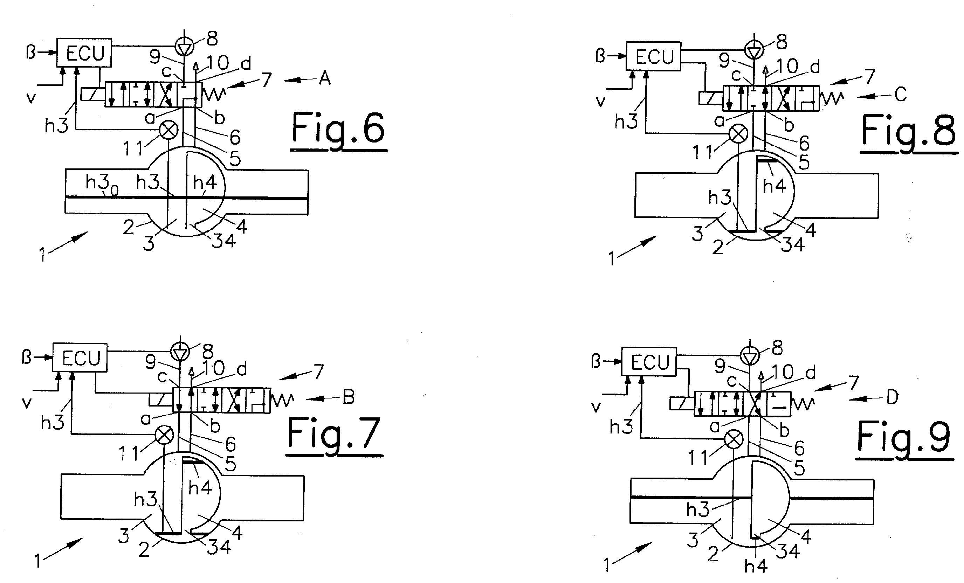

Die Fig. 6 bis Fig. 9 zeigen eine dritte Ausführungsvariante der Erfindung, bei der das Steuerventil 7 als 4/4-Wegventil ausgebildet ist. Wie bei der zweiten Ausführung lassen sich eine erste Stellung A, zweite Stellung B und eine dritte Stellung C ansteuern, wobei in der in Fig. 6 dargestellten ersten Stellung A (Ruhestellung) des Steuerventils 7 die beiden Räume - also sowohl der Ölsumpf 3, als auch der Ölbehälter 4 - mit der Umgebung verbunden und von der Druckquelle 8 getrennt sind. In der in Fig. 7 gezeigten zweiten Stellung B sind die Druckquelle 8 mit dem Ölsumpf 3 und der Ölbehälter 4 mit der Umgebung verbunden. In der in Fig. 8 gezeigten dritte Stellung C des Steuerventils 7 ist der Ölsumpf 3 von der Druckquelle 8 und von der Umgebung pneumatisch getrennt, wird aber auf Druck gehalten wird, um ein eingestelltes Ölniveau h3 im Ölsumpf zu halten. Zusätzlich zu den beim 4/3-Wegventil erläuterten ersten A, zweiten B und dritten Stellungen C ist noch eine vierte Stellung D vorgesehen, in welcher der Ölbehälter 4 mit der Druckquelle 8 und der Ölsumpf 3 mit der Umgebung pneumatisch verbunden ist. Auf diese Weise kann der Druck im Ölbehälter 4 erhöht und das darin enthaltene Öl in den Ölsumpf 3 gedrückt werden, wodurch das Ölniveau h3 im Ölsumpf 3 sogar über das Standardölniveau h3₀ angehoben werden kann, um auch bei extremen Fahrbedingungen eine ausreichende Schmierung zu gewährleisten. Extreme Fahrsituationen können auf der Basis von der Steuereinheit ECU zugeführten dritten Betriebsparametern, beispielsweise durch von einem Neigungssensor erfassten Neigungsinformationen β des Fahrzeuges, festgestellt werden. In der vierten Stellung D des Steuerventils 7 ist es möglich, den Ölbehälter 4 komplett zu entleeren. Sobald das erforderliche Ölniveau h3 des Ölsumpfes 3 erreicht wird, wird das Steuerventil 7 wieder in die dritte Stellung C bewegt, um das Ölniveau h3 zu halten.

Mit jeder der beschriebenen Ausführungsvarianten lassen sich Verluste im Antriebsstrang vermindern und eine ausreichende Schmierung des Differentialgetriebes 1 gewährleisten.

## Patentansprüche

1. Verfahren zum Steuern des Ölniveaus (h3) in einem Differentialgetriebe (1), für ein Fahrzeug, welches einen Ölsumpf (3) und einen vom Ölsumpf (3) pneumatisch getrennten Ölbehälter (4) aufweist, wobei der Ölbehälter (4) über zumindest einen Ölkanal (34) mit dem Ölsumpf (3) verbunden ist, und der Ölsumpf (3) über zumindest ein Steuerventil (7) und eine Luftleitung (5) mit einer pneumatischen Druckquelle (8) verbunden wird, wobei in zumindest einer Stellung (B) des Steuerventils (7) die Druckquelle (8) mit dem Ölsumpf (3) pneumatisch verbunden wird, wobei zumindest ein erster charakteristischer Betriebsparameter des Fahrzeugs ermittelt wird, **dadurch gekennzeichnet, dass** das Steuerventil (7) in Abhängigkeit zumindest dieses ersten charakteristischen Betriebsparameters betätigt wird, wobei als erster charakteristischer Betriebsparameter die Fahrzeuggeschwindigkeit (v) ausgewählt wird, und dass ein zweiter charakteristischer Betriebsparameter ermittelt wird und das Steuerventil (7) in Abhängigkeit dieses zweiten charakteristischen Betriebsparameters betätigt wird.

2. Verfahren nach Anspruch 1, **dadurch gekennzeichnet, dass** das Steuerventil (7) bei Erreichen und/oder oberhalb eines definierten Schwellwertes des ersten charakteristischen Betriebsparameters von einer einem Standardölniveau (h3₀) im Ölsumpf (3) zugeordneten ersten Stellung (A) in eine zweite Stellung (B) geschalten wird, in welcher der Ölsumpf (3) mit der Druckquelle (8) pneumatisch verbunden und vorzugsweise der Ölbehälter (4) mit einer Drucksenke, vorzugsweise mit der Umgebung, strömungsverbunden ist

3. Verfahren nach Anspruch 2, **dadurch gekennzeichnet, dass** das Steuerventil (7) unterhalb des definierten Schwellwertes des ersten charakteristischen Betriebsparameters in die erste Stellung (A) geschalten wird, in welcher der Ölsumpf (3) pneumatisch von der Druckquelle (8) getrennt und mit einer Drucksenke, vorzugsweise mit der Umgebung, pneumatisch verbunden ist.

4. Verfahren nach einem der Ansprüche 1 bis 3, **dadurch gekennzeichnet, dass** das Steuerventil (7) bei Erreichen oder oberhalb eines Schwellwertes des zweiten charakteristischen Betriebsparameters in eine dritte Stellung (C) geschalten wird, in welcher der Ölsumpf (3) von der Druckquelle (8) und von der Umgebung pneumatisch getrennt ist.

5. Verfahren nach Anspruch 4, **dadurch gekennzeichnet, dass** als zweiter charakteristischer Betriebsparameter das Ölniveau (h3) im Ölsumpf (3) ausgewählt wird.

6. Verfahren nach einem der Ansprüche 1 bis 5, **dadurch gekennzeichnet, dass** das Steuerventil (7) in Abhängigkeit zumindest eines dritten charakteristischen Betriebsparameters in eine vierte Stellung (D) geschaltet wird, in welcher der Ölbehälter (4) mit der Druckquelle (8), und vorzugsweise der Ölsumpf (3) mit der Umgebung, pneumatisch verbunden ist.

7. Differentialgetriebe (1) für ein Fahrzeug, welches einen Ölsumpf (3) und einen vom Ölsumpf (4) pneumatisch getrennten Ölbehälter (4) aufweist, wobei der Ölbehälter (4) über zumindest einen Ölkanal (34) mit dem Ölsumpf (3) hydraulisch verbunden ist, und der Ölsumpf (3) über zumindest ein Steuerventil (7) und eine Luftleitung (5) mit einer pneumatischen Druckquelle (8) verbindbar ist, wobei in zumindest einer Stellung des Steuerventils (7) die Druckquelle (8) mit dem Ölsumpf (3) pneumatisch verbunden ist, zur Durchführung des Verfahrens nach einem der Ansprüche 1 bis 6, **dadurch gekennzeichnet, dass** das Steuerventil (7) in Abhängigkeit zumindest eines durch die Fahrzeuggeschwindigkeit gebildeten ersten charakteristischen Betriebsparameters des Fahrzeugs betätigbar ist, wobei das Steuerventil (7) bei Erreichen und/oder oberhalb eines definierten Schwellwertes des ersten charakteristischen Betriebsparameters aus einer einem Standard-Ölniveau (h3₀) im Ölsumpf (3) zugeordneten ersten Stellung (A) in eine zweite Stellung (B) schaltbar ist, und wobei das Steuerventil (7) unterhalb des definierten Schwellwertes des ersten charakteristischen Betriebsparameters in die erste Stellung (A) schaltbar ist, in welcher der Ölsumpf (3) pneumatisch von der Druckquelle (8) getrennt und mit einer Drucksenke, vorzugsweise mit der Umgebung strömungsverbunden ist, und dass das Steuerventil (7) bei Erreichen oder oberhalb eines Schwellwertes eines zweiten charakteristischen Betriebsparameters in eine dritte Stellung (C) schaltbar ist, in welcher der Ölsumpf (3) von der Druckquelle (8) und von der Umgebung pneumatisch getrennt ist.

8. Differentialgetriebe (1) nach Anspruch 7, **dadurch gekennzeichnet, dass** das Steuerventil (7) in Abhängigkeit zumindest eines dritten charakteristischen Betriebsparameters in eine vierte Stellung (D) schaltbar ist, in welcher der Ölbehälter (4) mit der Druckquelle (8), und vorzugsweise der Ölsumpf (3) mit der Umgebung, pneumatisch verbunden ist.

9. Differentialgetriebe (1) nach Anspruch 7, **dadurch gekennzeichnet, dass** das Steuerventil (7) als 4/2-Wegventil ausgebildet ist.

10. Differentialgetriebe (1) nach Anspruch 7, **dadurch gekennzeichnet, dass** das Steuerventil (7) als 4/3-Wegventil ausgebildet ist.

11. Differentialgetriebe (1) nach Anspruch 8, **dadurch gekennzeichnet, dass** das Steuerventil (7) als 4/4-Wegventil ausgebildet ist.

## Claims

1. A method for controlling the oil level (h3) in a differential gear (1) for a vehicle having an oil sump (3) and an oil reservoir (4) pneumatically separated from the oil sump (3), wherein the oil reservoir (4) is connected via at least one oil channel (34) to the oil sump (3), and the oil sump (3) is connected via at least one control valve (7) and an air line (5) to a pneumatic pressure source (8), wherein in at least one position (B) of the control valve (7) the pressure source (8) is pneumatically connected to the oil sump (3), wherein at least one first characteristic operating parameter of vehicle is determined, **characterised in that** the control valve (7) is actuated depending on at least said first characteristic operating parameter, wherein the vehicle speed (v) is selected as the first characteristic operating parameter, and that a second characteristic operating parameter is determined and the control valve (7) is actuated depending on said second characteristic operating parameter.

2. A method according to claim 1, **characterised in that** the control valve (7) upon reaching and/or above a defined threshold value of the first characteristic operating parameter is switched from a first position (A) assigned to a standard oil level (h3₀) in the oil sump (3) to a second position (B) in which the oil sump (3) is pneumatically connected to the pressure source (8) and preferably the oil reservoir (4) is flow-connected to a pressure sink, preferably to the environment.

3. A method according to claim 2, **characterised in that** the control valve (7) is switched below the defined threshold value of the first characteristic operating parameter to the first position (A), in which the oil sump (3) is pneumatically separated from the pressure source (8) and pneumatically connected to a pressure sink, preferably to the environment.

4. A method according to one of the claims 1 to 3, **characterised in that** the control valve (7) upon reaching or above a threshold value of the second characteristic operating parameter is switched to a third position (C), in which the oil sump (3) is pneumatically separated from the pressure source (8) and from the environment.

5. A method according to claim 4, **characterised in that** the oil level (h3) in the oil sump (3) is selected as a second characteristic operating parameter.

6. A method according to one of the claims 1 to 5, **characterised in that** the control valve (7) is switched depending on at least one third characteristic operating parameter to a fourth position (D), in which the oil reservoir (4) is pneumatically connected to the pressure source (8), and preferably the oil sump (3) to the environment.

7. A differential gear (1) for a vehicle, which has an oil sump (3) and an oil reservoir (4) pneumatically separated from the oil sump (3), wherein the oil reservoir (4) is hydraulically connected via at least one oil channel (34) to the oil sump (3), and the oil sump (3) is connectable via at least one control valve (7) and an air line (5) to a pneumatic pressure source (8), wherein in at least one position of the control valve (7) the pressure source (8) is pneumatically connected to the oil sump (3) for carrying out the method according to one of the claims 1 to 6, **characterised in that** the control valve (7) can be actuated depending on at least one first characteristic operating parameter of the vehicle formed by the vehicle speed, wherein the control valve (7) upon reaching and/or above a defined threshold value of the first characteristic operating parameter can be switched from a first position (A) assigned to a standard oil level (h3₀) in the oil sump (3) to a second position (B), and wherein below the defined threshold value of the first characteristic operating parameter the control valve (7) can be switched to the first position (A) in which the oil sump (3) is pneumatically separated from the pressure source (8) and flow-connected to a pressure sink, preferably to the environment, and that the control valve (7) upon reaching or above a threshold value of a second characteristic operating parameter can be switched to a third position (C), in which the oil sump (3) is pneumatically separated from the pressure source (8) and from the environment.

8. A differential gear (1) according to claim 7, **characterised in that** the control valve (7) can be switched depending on at least one third characteristic operating parameter to a fourth position (D), in which the oil reservoir (4) is pneumatically connected to the pressure source (8), and preferably the oil sump (3) to the environment.

9. A differential gear (1) according to claim 7, **characterised in that** the control valve (7) is designed as a 4/2-way valve.

10. A differential gear (1) according to claim 7, **characterised in that** the control valve (7) is designed as a 4/3-way valve.

11. A differential gear (1) according to claim 8, **characterised in that** the control valve (7) is designed as a 4/4-way valve.

## Revendications

1. Procédé de commande du niveau d'huile (h3) dans une transmission différentielle (1) d'un véhicule qui comporte un carter d'huile (3) et un réservoir d'huile (4) pneumatiquement séparé du carter d'huile (3), le réservoir d'huile (4) étant relié au carter d'huile (3) par l'intermédiaire d'au moins un canal d'huile (34) et le carter d'huile (3) étant relié à une source de pression pneumatique (8), par l'intermédiaire d'au moins une soupape de commande (7) et une conduite d'air (5), dans au moins une position (B) de la soupape de commande (7), la source de pression (8) étant pneumatiquement reliée au carter d'huile (3), et au moins un premier paramètre de fonctionnement caractérisant du véhicule étant évalué,
**caractérisé en ce que**
la soupape de commande (7) est actionnée en fonction d'au moins ce premier paramètre de fonctionnement caractérisant, en tant que premier paramètre de fonctionnement, la vitesse du véhicule (v) étant choisie, et un second paramètre de fonctionnement caractérisant est évalué, la soupape de commande (7) étant actionnée en fonction de ce second paramètre de fonctionnement caractérisant.

2. Procédé conforme à la revendication 1,
**caractérisé en ce que**
lors de l'atteinte et/ou du dépassement d'une valeur de seuil définie du premier paramètre de fonctionnement caractérisant, la soupape de commande (7) est commutée d'une première position (A) associée à un niveau d'huile standard (h3₀) dans le carter d'huile (3) à une seconde position (B) dans laquelle le carter d'huile (3) est relié pneumatiquement à la source de pression (8) et de préférence le réservoir d'huile (4) est relié fluidiquement à un puits de pression, de préférence à l'environnement.

3. Procédé conforme à la revendication 2,
**caractérisé en ce qu'**
au-dessous de la valeur de seuil définie du premier paramètre de fonctionnement caractérisant, la soupape de commande (7) est commutée dans la première position (A) dans laquelle le carter d'huile (3) est séparé pneumatiquement de la source de pression (8), et est relié pneumatiquement à un puits de pression, de préférence à l'environnement.

4. Procédé conforme à l'une des revendications 1 à 3,
**caractérisé en ce que**
lors de l'atteinte ou du dépassement d'une valeur de seuil du second paramètre de fonctionnement caractérisant la soupape de commande (7) est commutée dans une troisième position (C) dans laquelle le carter d'huile (3) est séparé pneumatiquement de la source de pression (8) et de l'environnement.

5. Procédé conforme à la revendication 4,
**caractérisé en ce qu'**
en tant que second paramètre de fonctionnement caractérisant on choisit le niveau d'huile (h3) dans le carter d'huile (3).

6. Procédé conforme à l'une des revendications 1 à 5,
**caractérisé en ce que**
la soupape de commande (7) est commutée en fonction d'au moins un troisième paramètre de fonctionnement caractérisant dans une quatrième position (D) dans laquelle le réservoir d'huile (4) est relié pneumatiquement à la source de pression (8) et de préférence le carter d'huile (3) est relié pneumatiquement à l'environnement.

7. Transmission différentielle (1) destinée à un véhicule qui comporte un carter d'huile (3) et un réservoir d'huile (4) pneumatiquement séparé du carter d'huile (3), le réservoir d'huile (4) étant relié fluidiquement au carter d'huile (3) par l'intermédiaire d'au moins un canal d'huile (34) et le carter d'huile (3) pouvant être relié à une source de pression pneumatique (8) par l'intermédiaire d'au moins une soupape de commande (7) et une conduite d'air (5), dans au moins une position de la soupape de commande (7) la source de pression (8) étant reliée pneumatiquement au carter d'huile (3), permettant la mise en œuvre du procédé conforme à l'une des revendications 1 à 6,
**caractérisé en ce que**
la soupape de commande (7) peut être actionnée en fonction d'au moins un premier paramètre de fonctionnement caractérisant du véhicule constitué par la vitesse de ce véhicule, lors de l'atteinte et/ou du dépassement d'une valeur de seuil définie du premier paramètre de fonctionnement caractérisant, la soupape de commande (7) pouvant être commutée d'une première position (A) associée à un niveau d'huile standard (h3₀) dans le carter d'huile (3) à une seconde position (B), et, au-dessous de la valeur de seuil définie du premier paramètre de fonctionnement caractérisant la soupape de commande (7) pouvant être commutée dans la première position (A) dans laquelle le carter d'huile (3) est séparé pneumatiquement de la source de pression (8) et est relié fluidiquement à un puits de pression, de préférence à l'environnement, et lors de l'atteinte ou du dépassement d'une valeur de seuil d'un second paramètre de fonctionnement caractérisant la soupape de commande (7) pouvant être commutée dans une troisième position (C) dans laquelle le carter d'huile (3) est séparé pneumatiquement de la source de pression (8) et de l'environnement.

8. Transmission différentielle (1) conforme à la revendication 7,
**caractérisée en ce que**
la soupape de commande (7) peut être commutée en fonction d'au moins un troisième paramètre de fonctionnement caractérisant dans une quatrième position (D) dans laquelle le réservoir d'huile (4) est relié pneumatiquement à la source de pression (8) et de préférence, le carter d'huile (3) est relié pneumatiquement à l'environnement.

9. Transmission différentielle (1) conforme à la revendication 7,
**caractérisée en ce que**
la soupape de commande (7) est réalisée sous la forme d'une soupape à 4/2 voies.

10. Transmission différentielle (1) conforme à la revendication 7,
**caractérisée en ce que**
la soupape de commande (7) est réalisée sous la forme d'une soupape à 4/3 voies.

11. Transmission différentielle (1) conforme à la revendication 8,
**caractérisée en ce que**
la soupape de commande (7) est réalisée sous la forme d'une soupape à 4/4 voies.
